# EUROPÄISCHE PATENTSCHRIFT

(11) **EP 1 793 463 B1**
(45) Veröffentlichungstag und Bekanntmachung des Hinweises auf die Patenterteilung: **24.11.2010**
(21) Anmeldenummer: 05024821.0
(22) Anmeldetag: 14.11.2005
(51) Int. Cl.: H02G 3/04, A61G 12/00

(54) **Konsole zur medizintechnischen Versorgung**
Console for medical supply
Console pour alimentation médicale

(43) Veröffentlichungstag der Anmeldung: 06.06.2007
(73) Patentinhaber: Ondal Holding GmbH, 36088 Hünfeld (DE)
(72) Erfinder: Knappe, Stefan, 36151 Burghaun (DE)
(74) Vertreter: Graf von Stosch, Andreas

(56) Entgegenhaltungen:
- EP-A- 1 587 194
- WO-A-02/096335
- US-A1- 2004 020 675

## Beschreibung

Die Erfindung betrifft eine Konsole nach der Gattung des Oberbegriffs des Anspruch 1.

Derartige Konsolen sind in einer Vielzahl von verschiedenen Ausführungen bekannt, beispielsweise durch die DE3106255A1 oder EP 1 587 194 A2.

Der Erfindung liegt die Aufgabe zu Grunde, eine gattungsgleiche Konsole zu schaffen, die eine kostengünstige Vorfertigung bzw. Konfektion von wahlweisen Anschlussdosen ermöglicht und eine einfache Montage und einfache Wartungsarbeiten erlaubt.

Diese Aufgabe wird durch die kennzeichnenden Merkmale des Anspruchs 1 gelöst. Vorteilhafte Weiterbildungen/Ausgestaltungen der Erfindung nach dem Anspruch 1 gehen aus den Unteransprüchen hervor.

Die Erfindung wird durch ein Ausführungsbeispiel an Hand von 33 Figuren (teilweise in schematischer Darstellung) näher erläutert.

Es zeigt:
- Fig. 1: in einer perspektivischen Ansicht eine Konsole mit einem Traggestell, an dem an zwei gegenüberliegenden Seiten jeweils eine Säule mit Moduln angeordnet sind;
- Fig. 2-7: in verschiedenen Ansichten ein erstes Modul;
- Fig. 8-13: in verschiedenen Ansichten ein zweites Modul;
- Fig. 14-17: in verschiedenen Ansichten eine Abdeckplatte;
- Fig. 18: die Konsole wie Fig. 1, jedoch ohne Verkleidung des Gestells und mit zwei Tabletts;
- Fig. 19: in einer Seitenansicht die Konsole nach der Fig. 18, jedoch rückseitig auf die Tabletts;
- Fig. 20: die Konsole nach der Fig. 19, jedoch von einer entgegengesetzten Seite;
- Fig. 21: in einer perspektivischen Ansicht eine einzelne Säule mit mehreren Moduln;
- Fig. 22-24: in verschiedenen Ansichten eine Trennplatte;
- Fig. 25-28: in verschiedenen Ansichten die Säule nach der Fig.21;
- Fig. 29: die Konsole nach der Fig. 19, jedoch in einer Draufsicht und ohne Tabletts;
- Fig. 30: die Konsole nach der Fig. 29, jedoch mit aufgeklappten Säulen;
- Fig. 31: die Konsole nach der Fig. 18, jedoch mit aufgeklappten Säulen;
- Fig. 32: in einer Seitenansicht die Konsole nach der Fig. 31 mit Blick auf die offenen Seiten der Moduln, und
- Fig. 33: in einer Seitenansicht die komplette Konsole an einem Deckenstativ.

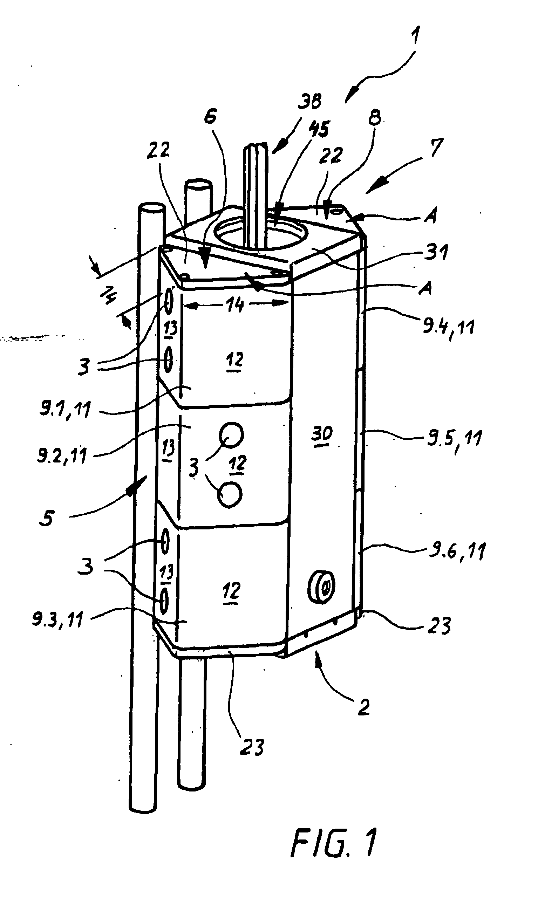

Fig. 1 zeigt eine Konsole 1 mit einem senkrecht angeordneten Traggestell 2 und mit mehreren Anschlussdosen 3,4,29 zur medizintechnischen Versorgung.

An einer ersten Seite 5 des Traggestells 2 sind eine erste senkrecht angeordnete Säule 6 und an einer zweiten gegenüberliegenden Seite 7 eine zweite senkrecht angeordnete Säule 8 mit jeweils drei übereinander angeordneten Moduln 9.1-9.3, 9.4-9.6 angeordnet.

Die Moduln 9.1-9.6 sind mit wahlweisen Anschlussdosen 3,4,29 versehen.

Die Moduln 9.1-9.6 bestehen aus Abschnitten 10,10.1 eines Strangprofils 11,11.1.

Das Strangprofil 11,11.1 weist eine erste und eine zweite Seitenwand 12,13 gleicher Breite 14 in einem rechten Winkel auf.

In einem ersten Endbereich 15 der ersten Seitenwand 12 ist ein erster Kanal 16 und in einem zweiten Endbereich 17 der zweiten Seitenwand 13 ist ein zweiter Kanal 18 und in einem Kanten-Bereich 19 einer Winkelkante 20 ist ein dritter Kanal 21 jeweils mit einem kreisförmigen Querschnitt angeordnet.

Alle Moduln 9.1-9.3; 9.4-9.6 der ersten und der zweiten Säule 6,8 sind mit einer oberen und einer unteren Abdeckplatte 22,23 mittels jeweils einer Gewindestange 24 durch alle Kanäle 16,18,21 fest verbunden.

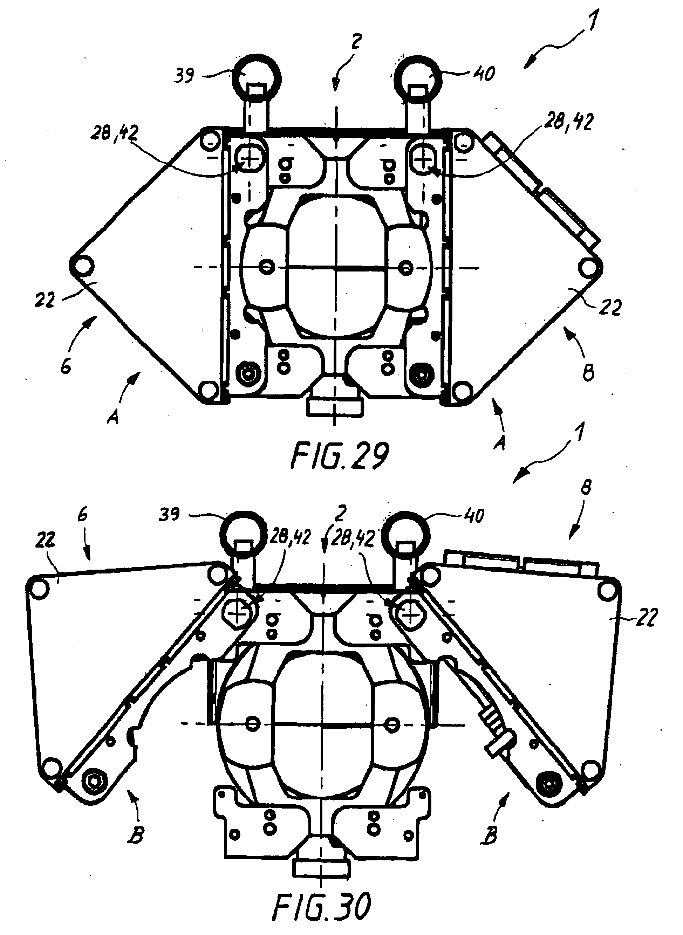

Die oberen und unteren Abdeckplatten 22,23 weisen seitens einer offenen Seite 25 der Moduln 9.1-9.3;9.4-9.6 jeweils eine Verlängerung 26 auf, an der jeweils ein Drehlager 27 angeordnet ist und mit dem Traggestell 2 über ein jeweiliges Gelenk 28 (Fig. 29-31) gelenkig verbunden ist zum Verschwenken der ersten und der zweiten Säule 6,8 von dem Traggestell 2.

Die offenen Seiten 25 der Moduln 9.1-9.3;9.4-9.6 liegen in einer zugeschwenkten Position A an einer ersten bzw. zweiten Seite 5,7 des Traggestells 2 an.

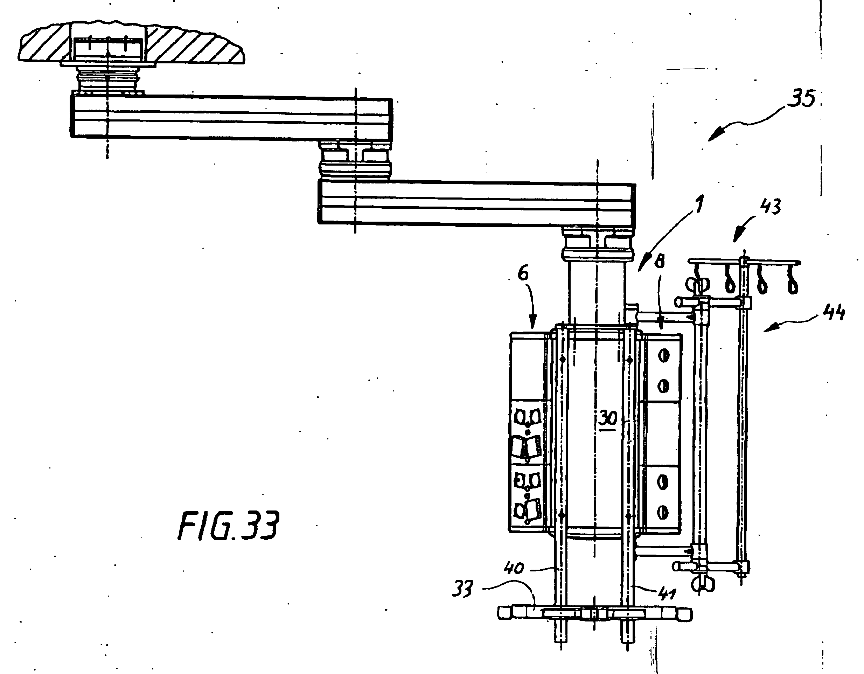

Zur Verbindung mit einem Stativ 35 (Fig. 33) weist ein oberes Teil des Traggestells 2 eine Stativverbindungsaufnahme 45 auf.

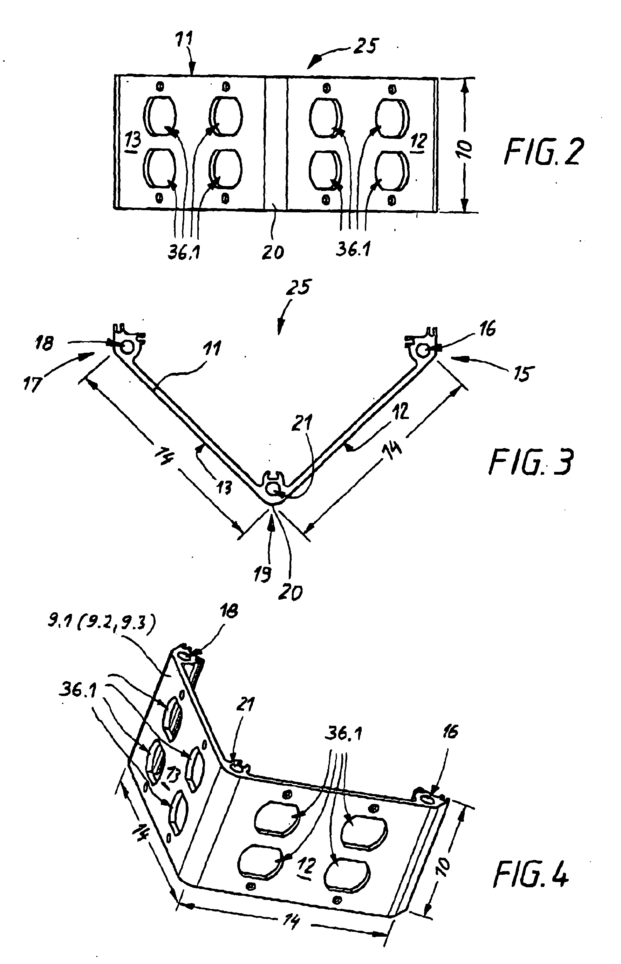

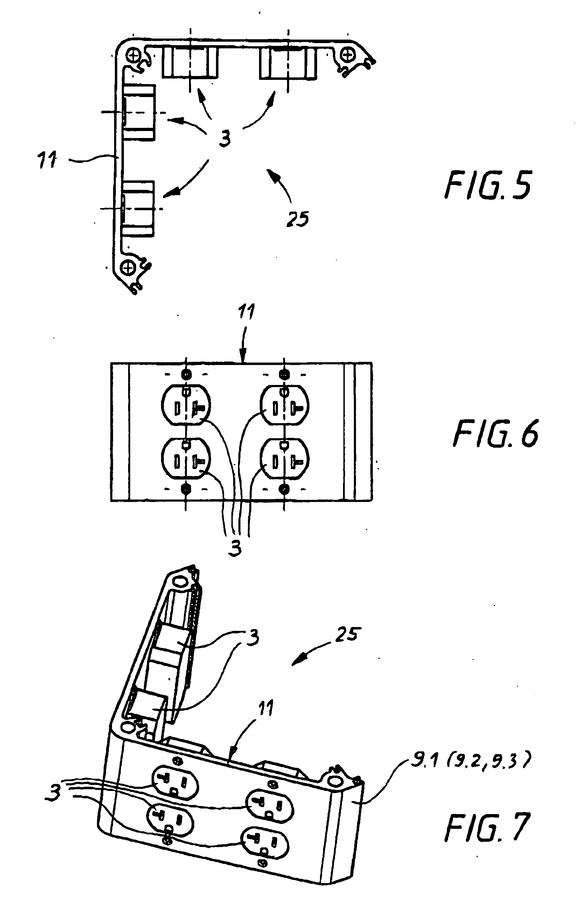

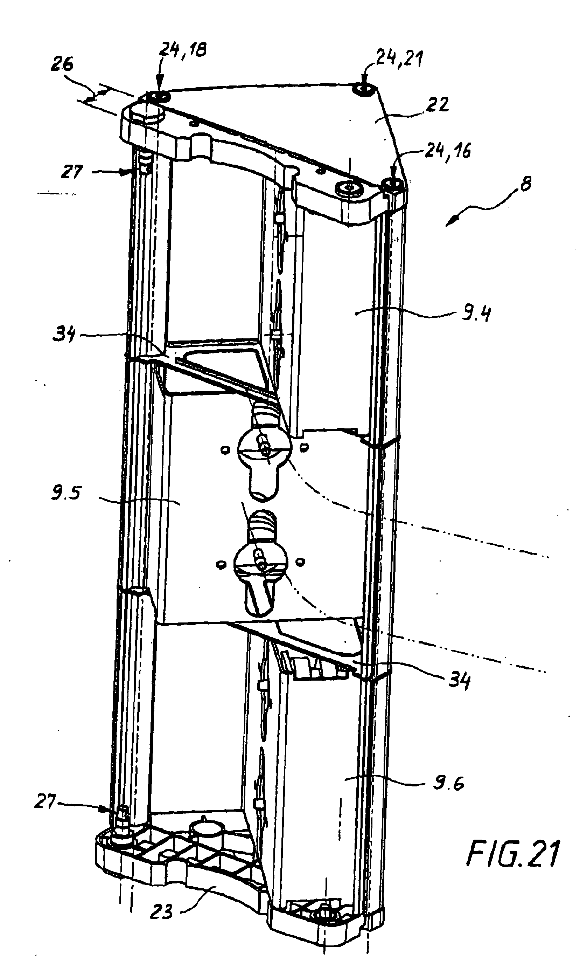

Fig. 2 bis 7 zeigen in verschiedenen Ansichten ein erstes, zweites und drittes Modul 9.1-9.3. Die Moduln 9.1-9.3 bestehen aus Abschnitten 10 eines Strangprofils 11. Das Strangprofil 11 weist eine erste und eine zweite Seitenwand 12,13 gleicher Breite 14 in einem rechten Winkel auf. In einem ersten Endbereich 15 der ersten Seitenwand 12 ist ein erster Kanal 16 und in einem zweiten Endbereich 17 der zweiten Seitenwand 13 ist ein zweiter Kanal 18 und in einem Kanten-Bereich 19 einer Winkelkante 20 ist ein dritter Kanal 21 jeweils mit einem kreisförmigen Querschnitt angeordnet. Die Kanäle 15,18,21 dienen zur Aufnahme jeweils einer Gewindestange 24 zum Verbinden der Moduln 9.1-9.3;9.4-9.6 über eine obere und untere Abdeckplatte 22,23 (Fig. 1 und 21). Die Abschnitte 10 nach den Fig. 2 und 4 sind hier bereits mit ersten Öffnungen 36 zur Aufnahme von ersten Anschlussdosen 3 für eine Stromversorgung versehen. Die Abschnitte 10 nach den Fig. 5 bis 7 sind hier bereits mit ersten Anschlussdosen 3 für eine Stromversorgung versehen.

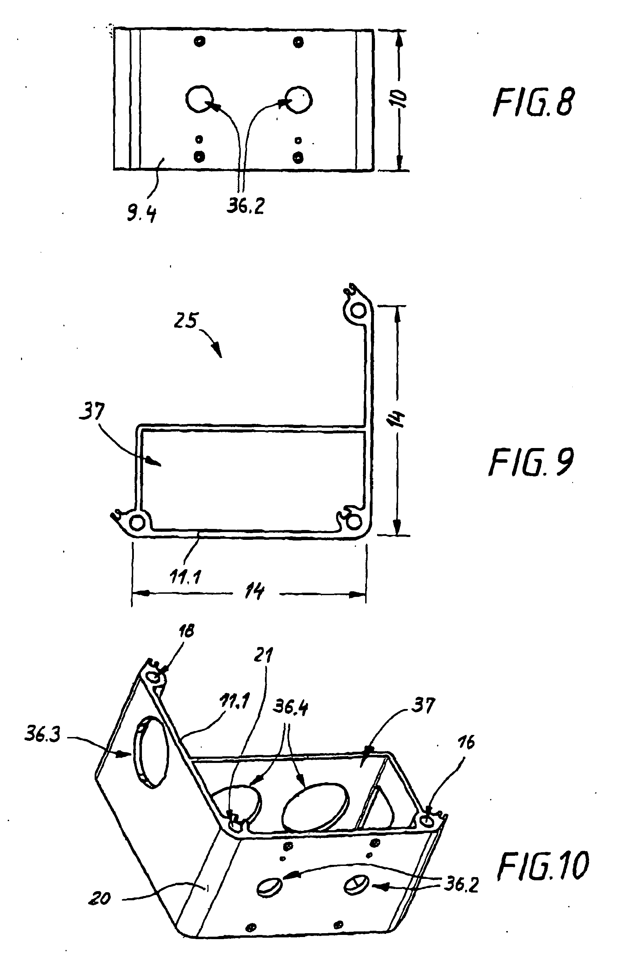

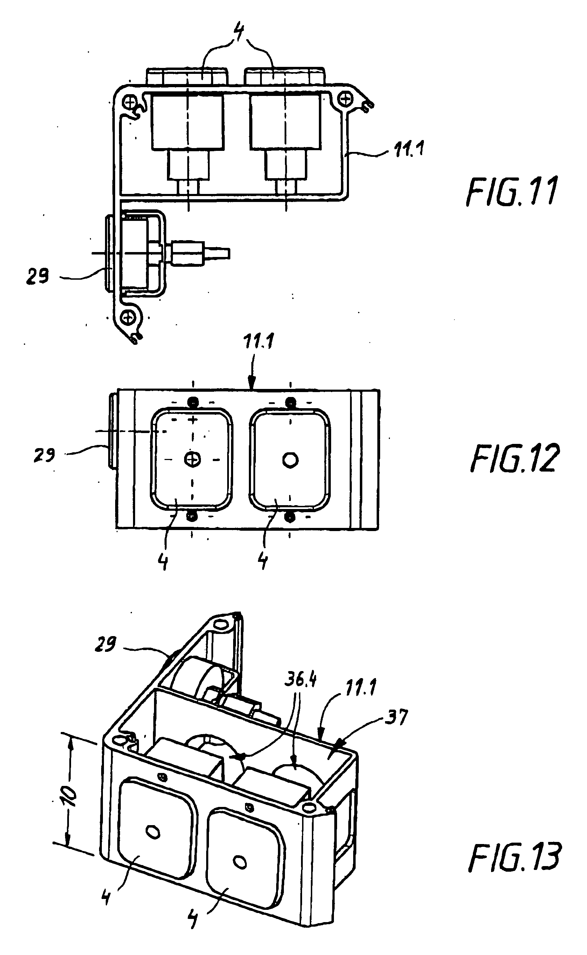

Fig. 8 bis 13 zeigen in verschiedenen Ansichten ein viertes, fünftes und sechstes Modul 9.4-9.6. Die Moduln 9.4-9.6 bestehen aus Abschnitten 10 eines zweiten Strangprofils 11.1. Das zweite Strangprofil 11.1 weist eine erste und eine zweite Seitenwand 12,13 gleicher Breite 14 in einem rechten Winkel auf. In einem ersten Endbereich 15 der ersten Seitenwand 12 ist ein erster Kanal 16 und in einem zweiten Endbereich 17 der zweiten Seitenwand 13 ist ein zweiter Kanal 18 und in einem Kanten-Bereich 19 einer Winkelkante 20 ist ein dritter Kanal 21 jeweils mit einem kreisförmigen Querschnitt angeordnet. Die Kanäle 15,18,21 dienen zur Aufnahme jeweils einer Gewindestange 24 zum Verbinden der Moduln 9.4-9.6 über eine obere und untere Abdeckplatte 22,23 (Fig. 1 und 21). Die Abschnitte 10 nach den Fig. 8 und 10 sind hier bereits mit zweiten Öffnungen 36.1 zur Aufnahme von zweiten Anschlussdosen 4 für eine Gasentnahme und mit einer dritten Öffnung 36.2 für eine Aufnahme einer dritten Anschlussdose 29 für elektronische Kommunikationstechnik versehen. Die Abschnitte 10 nach den Fig. 11 bis 13 sind hier bereits mit zwei zweiten Anschlussdosen 4 für eine Stromversorgung und mit einer dritten Anschlussdose 29 für elektronische Kommunikationstechnik (beispielsweise für eine Videokamera, Monitor usw.) versehen. Das zweite Strangprofil 11.1 nach den Fig. 8 bis 13 unterscheidet sich nach dem ersten Strangprofil 11 nach den Fig. 2 bis 7 dadurch, dass hier das zweite Strangprofil 11.1 mit einem (rechteckförmigen) Kanal 37 versehen ist, wodurch eine räumliche Trennung (auch nach diversen Vorschriften) von unterschiedlichen Anschlussdosen 3,4,29 mit entsprechenden Leitungen 38 erreicht wird.

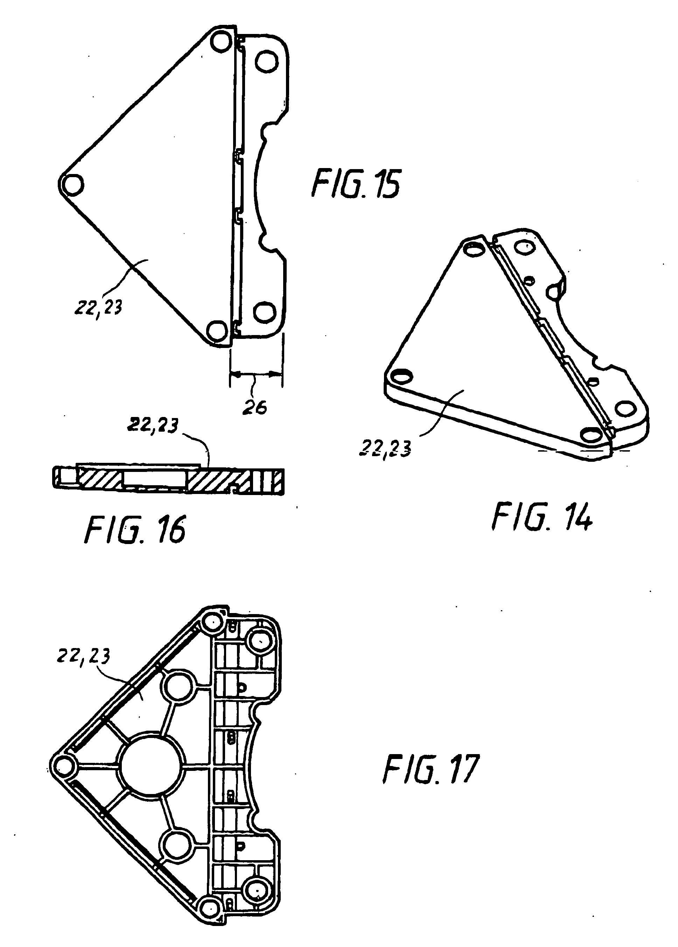

Fig. 14 bis 17 zeigen in verschiedenen Ansichten eine obere bzw. untere Abdeckplatte 22,23, die jeweils miteinander identisch und aus einem Werkzeug hergestellt sind.

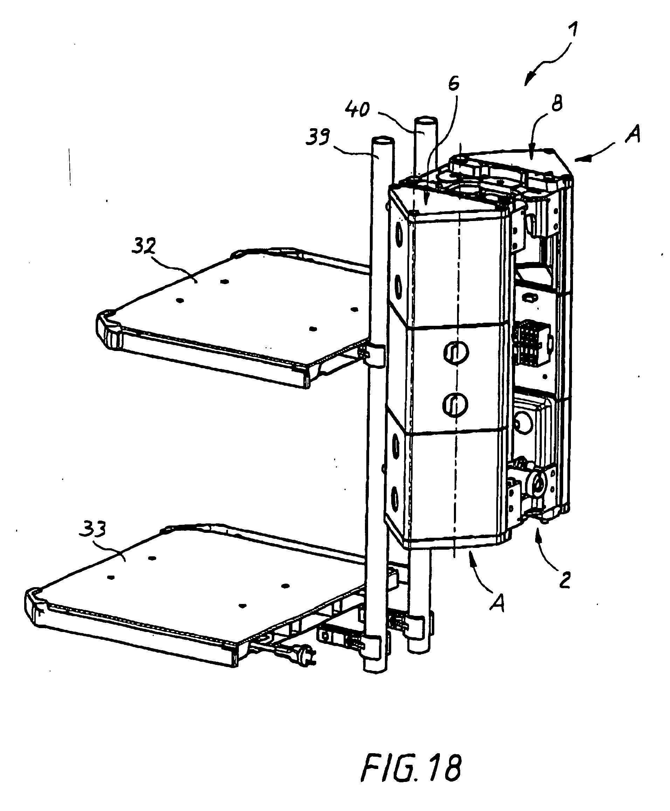

Fig. 18 zeigt die Konsole 1 wie Fig. 1, jedoch ohne die Verkleidung 30 und ohne die Schutzabdeckung 31 (Fig. 1) des Gestells 2, aber mit zwei Tabletts 32,33.

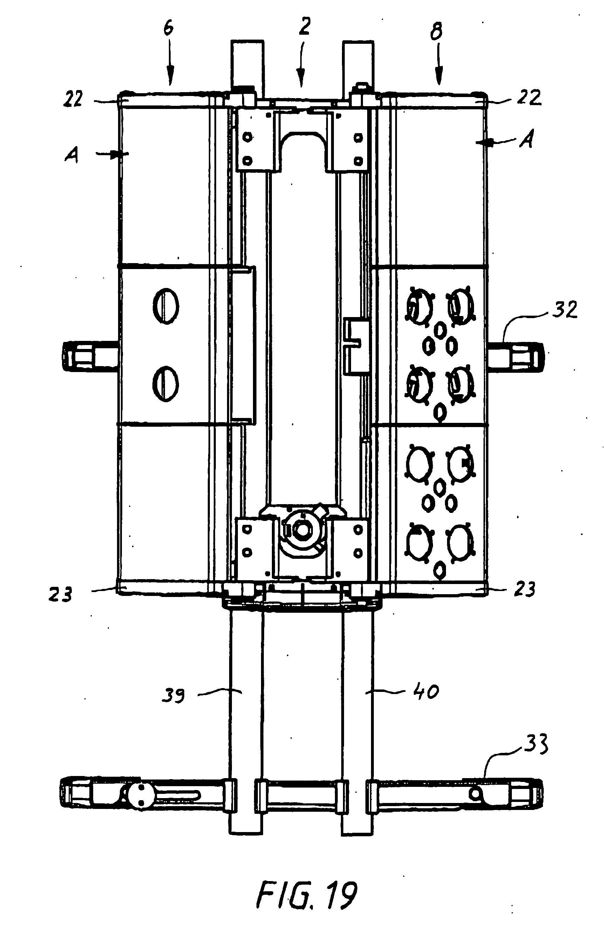

Fig. 19 zeigt in einer Seitenansicht die Konsole 1 nach der Fig. 18, jedoch rückseitig auf die Tabletts 32,33.

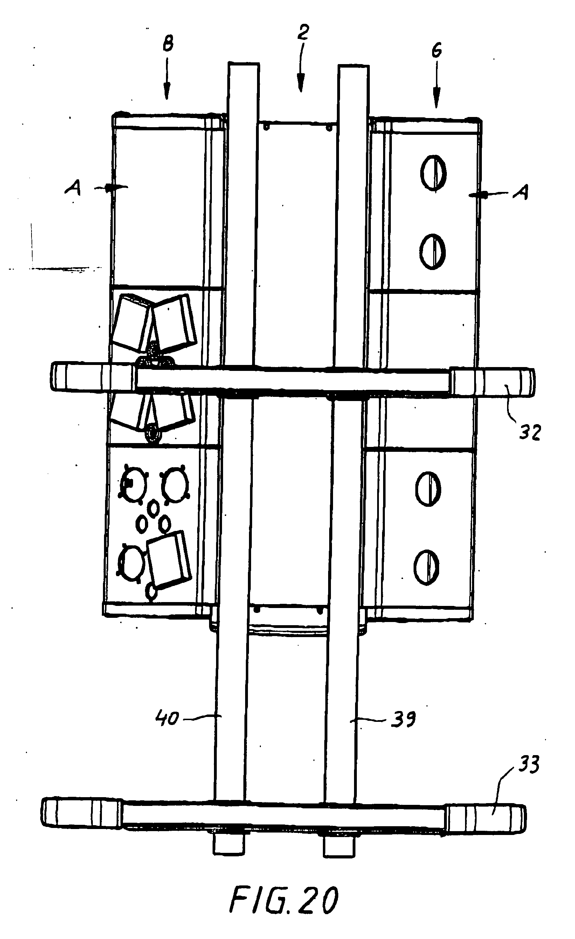

Fig. 20 zeigt die Konsole 1 nach der Fig. 19, jedoch von einer entgegengesetzten Seite.

Fig. 21 zeigt in einer perspektivischen Ansicht eine einzelne zweite Säule 8 mit drei Moduln 9.4-9.6.

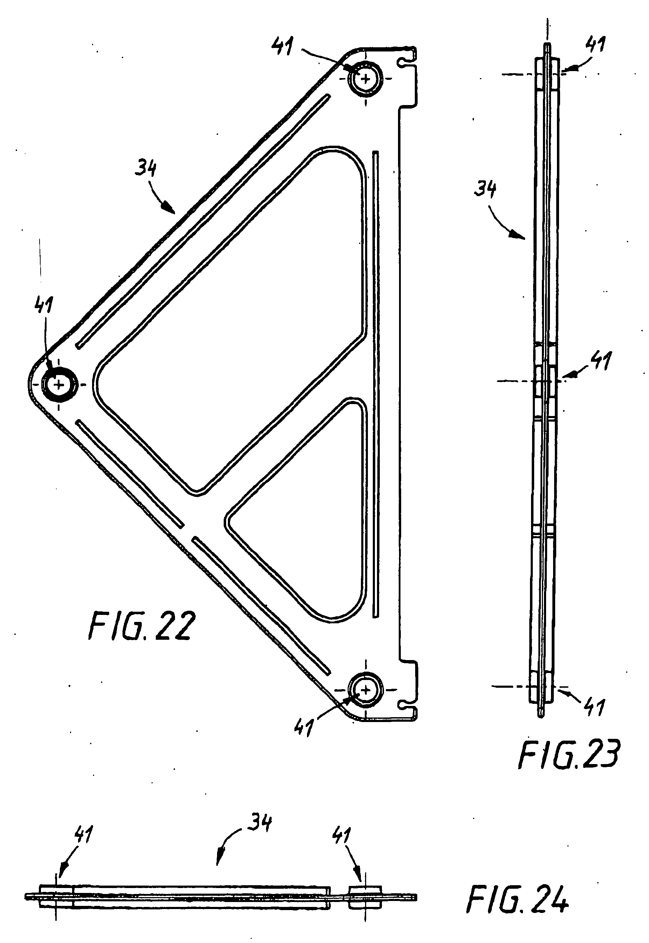

Fig. 22 bis 24 zeigen in verschiedenen Ansichten eine Trennplatte 34.

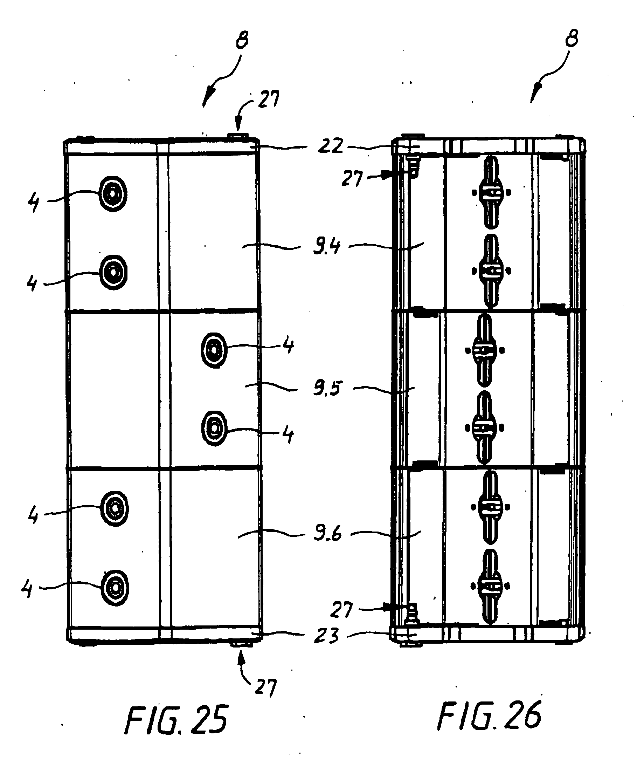

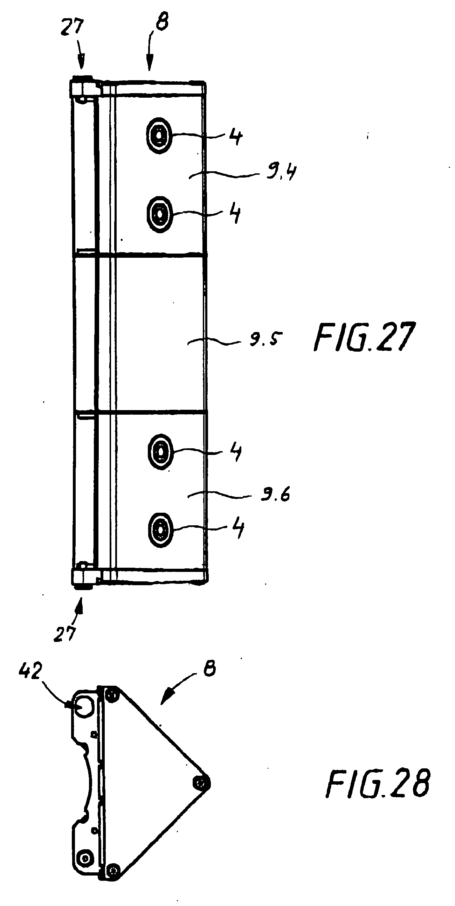

Fig. 25 bis 28 zeigen in verschiedenen Ansichten die Säule 1 nach der Fig.21.

Fig. 29 zeigt die Konsole 1 in einer zugeklappten Position A nach der Fig. 19, jedoch in einer Draufsicht und ohne die beiden Tabletts 32,33.

Fig. 30 zeigt die Konsole 1 in einer aufgekjlappten Position B nach der Fig. 29, jedoch mit aufgeklappten Säulen 6,8.

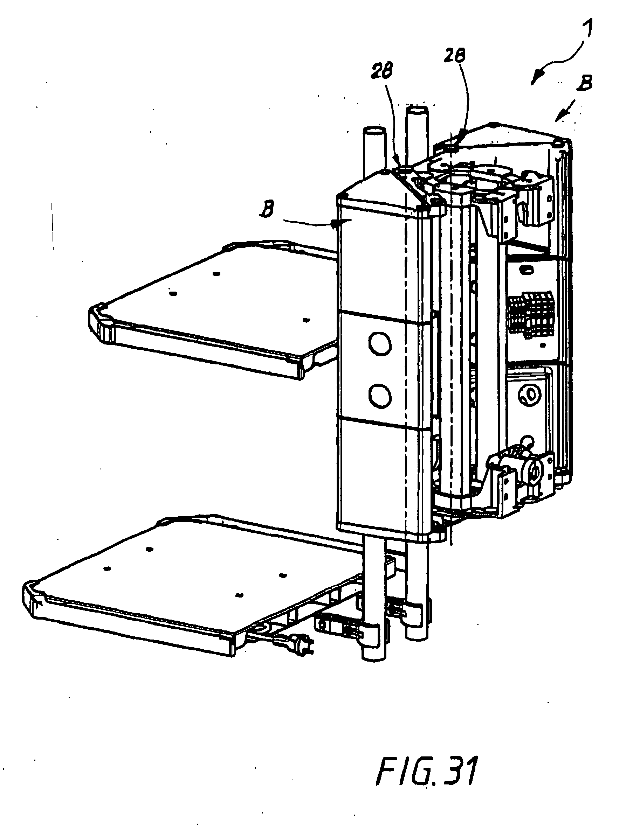

Fig. 31 zeigt die Konsole 1 nach der Fig. 18, jedoch mit aufgeklappten Säulen 6,8.

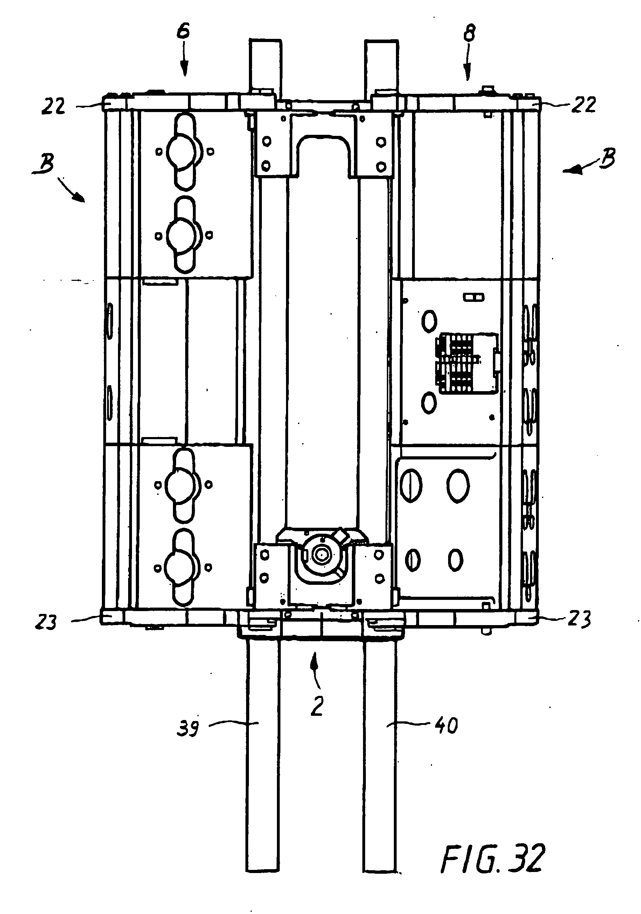

Fig. 32 zeigt in einer Seitenansicht die Konsole 1 nach der Fig. 31 mit Blick auf die offenen Seiten 25 der Moduln 9.1-9.6.

Fig. 33 zeigt in einer Seitenansicht die komplette Konsole 1 an einem Deckenstativ 35 mit einem Tablett 33 und mit einer Halterung 43 für eine Infusionsstange 44.

Die Moduln 9.1-9.6 ermöglichen unterschiedliche Ländervarianten von Stromsteckdosen (erste Anschlussdosen 3) (alle international gängigen Steckdosentypen sind einbaubar), unterschiedliche Bauformen von Gasentnahmedosen (zweite Anschlussdosen 4) und unterschiedliche Bauformen von Kommunikationselektronikanschlüssen (dritte Anschlussdosen 4) aufzunehmen.

Durch das wahlweise Zusammenfügen einzelner Moduln 9.1-9.6, die untereinander durch Trennplatten 34 und hier nicht näher dargestellten Schottblechen separiert sind, wird eine Vielfalt von Konfigurationsmöglichkeiten erzielt. Die Schottbleche schotten jeweils die offenen Seiten 25 der Moduln 9.1-9.6 ab. Unter Berücksichtigung von aktuellen Sicherheitsbestimmungen lassen sich wahlweise erste, zweite und dritte Anschlussdosen 3,4,29 in einer ersten bzw. zweiten Säule 6,8 vormontiert (aber auch komplett mit einer Konsole 1 und wahlweise auch mit einem Deckenstativ 35) dem Anwender bereitstellen.

Mit Hilfe von unterschiedlich bestückten Moduln 9.1-9.6 lassen sich unterschiedliche Bestückungskonfigurationen von Säulen 6,8 baukastenartig realisieren, wobei ein System von Moduln 9.1-9.6 unterschiedlich hoher Abschnitte 10,10.1 von Strangprofilen 11,11.1 vorgesehen werden können. Eine oder auch zwei Säulen 6,8, montiert an dem Traggestell 2, ergeben eine medizintechnische Versorgungseinheit (Konsole 1), die dem Anwender ermöglicht, medizinische Gase, elektrische Stromversorgung sowie Kommunikationstechnik zur Verfügung zu haben. Die Gestaltung bzw. Ausführung wird vom Anwender festgelegt. Die Konsole 1 umfasst im allgemeinen Tabletts 32,33 sowie eine Halterung 43 mit Infusionsstangen 44.

### Aufbau der Säulen 6,8:

Die einzelnen Moduln 9.1-9.6 werden mit den entsprechenden Anschlussdosen 3,4,29 bestückt und verschraubt. Entsprechende Leitungen 38 werden angeschlossen und gemäß Qualitätsvorgaben geprüft. Unterschiedlich bestückte Moduln 9.1-9.6 werden mit Hilfe von Trennplatten 34 untereinander ausgerichtet und montiert. Mehrere Moduln 9.1-9.6 sind durch eine Säule 6,8 zusammengefasst, die oben und unten mit einer Abdeckplatte 22,23 verschlossen werden. Gewindestangen 24 inkl. Verschraubungen verbinden die Säulen 6,8 form- und kraftschlüssig miteinander. Diese montierte Einheit wird an einem Traggestell 2 montiert, um anschließend, vervollständigt mit Verkleidungen 30, Tabletts 32,33 und Infusionsstangen 44, als kundenspezifische medizintechnische Versorgungseinheit (Konsole 1) ausgeliefert zu werden. Für Service bzw. Inspektionen können die Säulen 6,8 mittels der Drehlager 27 aufgeschwenkt (Position B) werden.

Die Trennplatten 34 dienen als Einlegeteil dazu. die abgesägten Strangprofile 11.11.1 untereinander zu zentrieren. Des weiteren werden Toleranzen, die sich beim Absägen einstellen, dadurch kaschiert. Diese Trennplatten 34 dienen ebenfalls dazu, eine gasdichte Trennung zwischen zwei Moduln 9.1-9.6 sicherzustellen. Hierfür wird von der Trennplatte 34 eine Kante bereitgestellt, die als Anlegefläche für die Schottbleche dient.

Die Anzahl der Moduln 9.1-9.6 ist frei wählbar und unabhängig vom Tragsystem für Tabletts 32,33 und vom Geräteträger. Gas- und elektrische Anschlüsse können auf einer Seite (z.B. nur nach vorn bzw. nach hinten) montiert werden. Die Dreiecksform der Moduln 9.1-9.6 ergeben Vorteile hinsichtlich Ergonomie, visueller Kontrolle und Kabel-/Schlauchverlegung bzw. Anschlussbelegung. Außerdem ist keine Festlegung bezüglich Einbauort vorn oder hinten bzw. linke oder rechte Seite notwendig. Die Stromanschlüsse 3, Gasanschlüsse 4 und Kommunikationsanschlüsse 29 sind wahlweise kombinierbar einbaubarDLIG> 3. Konsole nach Anspruch 1, dadurch gekennzeichnet, dass die obere und die untere Abdeckplatte (22,23) identisch sind.

Die Moduln 9.1-9.6 sind baukastenartig in einem System mit verschiedener Höhe der Abschnitte 10,10.1 versehen, wodurch sich maximale Kombinationsmöglichkeiten mit verschiedenen Moduln 9.1-9.6 in Bauhöhe wie auch in Kombination mit verschiedenen ersten, zweiten und dritten Anschlussdosen 3,4,29 ergeben.

Die Moduln 9.1-9.6 sind wahlweise untereinander von jeweils einer Trennplatte 34 getrennt, wodurch die Moduln 9.1-9.6 voneinander beispielsweise gasdicht getrennt werden können.

Die offenen Seiten 25 sind von einem Schottblech abgeschottet, wodurch beispielsweise eine Gasabdichtung erreicht wird.

Die Konsole 1 ist zum Positionieren in X-Y-Z-Richtung mit einem Stativ, insbesondere mit einem Deckenstativ 35 verbunden.

In Rahmen der Erfindung kann auch vorgesehen werden, lediglich nur eine Säule am Traggestell 2 vorzusehen.

### Bezugszeichenliste:

- 1: Konsole
- 2: Traggestell
- 3: Erste Anschlussdose (Stromversorgung)
- 4: Zweite Anschlussdose (Gasentnahme)
- 5: Erste Seite
- 6: Erste Säule
- 7: Zweite Seite
- 8: Zweite Säule
- 9.1 - 9.6: 1. - 6. Modul
- 10: 1. Abschnitt/Strangprofil 11
- 10.1: 2. Abschnitt/Strangprofil 11.1
- 11: 1. Strangprofil
- 11.1: 2. Strangprofil
- 12: Erste Seitenwand
- 13: Zweite Seitenwand
- 14: Breite/Seitenwand 12,13
- 15: Erster Endbereich
- 16: Erster Kanal
- 17: Zweiter Endbereich
- 18: Zweiter Kanal
- 19: Kanten-Bereich
- 20: Winkelkante
- 21: Dritter Kanal
- 22: Obere Abdeckplatte
- 23: Untere Abdeckplatte
- 24: Gewindestange
- 25: Offene Seite
- 26: Verlängerung/Abdeckplatte 22,23
- 27: Drehlager
- 28: Gelenk
- 29: Dritte Anschlussdose (Kommunikationsanschluss)
- 30: Verkleidung
- 31: Schutzabdeckung
- 32: Erstes Tablett
- 33: Zweites Tablett
- 34: Trennplatte
- 35: Deckenstativ
- 36.1: Erste Öffnung
- 36.2: Zweite Öffnung
- 36.3: Dritte Öffnung
- 36.4: Vierte Öffnung
- 37: Kanal
- 38: Leitung
- 39: Haltestange
- 40: Haltestange
- 41: Bohrung
- 42: Drehlageraufnahme
- 43: Halterung
- 44: Infusionsstange
- 45: Stativverbindungssufnahme
- A: Zugeschwenkte Position
- B: Aufgeschwenkte Position

## Patentansprüche

1. Konsole (1) mit einem senkrecht angeordneten Traggestell (2) und mit mehreren Anschlussdosen (3,4) zur medizintechnischen Versorgung,
**dadurch gekennzeichnet,**
(a) **dass** an einer ersten Seite (5) des Traggestelle (2) eine erste senkrecht angeordnete Säule (8) und an einer zweiten gegenüberliegenden Seite (7) eine zweite senkrecht angeordnete Säule (8) mit jeweils übereinander angeordneten Moduln (9.1-8.3;9.4-9,6) angeordnet sind,
(b) **dass** die Moduln (9.1-9.3:9.4-9,6) mit wahlwelsen Anschlussdosen (3,4,29) versehen sind,
(c) **dass** die Moduln (9.1-9.3;9.4-9,6) aus Abschnitten (10) eines Strangprofils (11,11.1) bestehen,
(d) **dass** das Strangprofil (11) eine erste und eine zweite Seitenwand (12,13) gleicher Breite (14) in einem rechten Winkel aufweist, wobei
(e) in einem ersten Endbereich (15) der ersten Seitenwand (12) ein erster Kanal (16) und in einem zweiten Endbereich (17) der zweiten Seitenwand (13) ein zweiter Kanal (18) und in einem Kanten-Bereich (18) einer Winkelkante (20) ein dritter Kanal (21) jeweils mit einem kreisförmigen Querschnitt angeordnet sind,
(f) **dass** alle Moduln (9.1-9.3;9.4-9.6) der ersten und der zweiten Säule (6,8) mit einer oberen und einer unteren Abdeckplatte (22,23) mittels jeweils einer Gewindestange (24) durch alle Kanäle (18,18,21) fest verbunden sind,
(g) **dass** die oberen und unteren Abdeckplatten (22,23) seitens einer offenen Seite (25) der Moduln (9.1-9.3;9.4-8.8) jeweils eine Verlängerung (26) aufweisen, an der jeweils ein Drehlager (27) angeordnet ist und mit dem Traggestell (2) über ein jeweiliges Gelenk (28) gelenkig verbunden ist zum Verschwenken der ersten und der zweiten Säule (8,8) von dem Traggestell (2), und
(h) wobei die offenen Seiten (25) der Moduln (9.1-9.3;9.4-9.6) in einer zugeschwenkten Position (A) an der ersten bzw. zweiten Seite (5,7) des Traggestelle (2) anliegen.

2. Konsole nach Anspruch 1, **dadurch gekennzeichnet, dass** zusätzlich zu den Anschlussdosen (3,4) zur medlzintechnischen Versorgung wahlweise dritte Anschlussdosen (29) zur elektronischen Kommunikation vorgesehen sind.

3. Konsole nach Anspruch 1, **dadurch gekennzeichnet, dass** die obere und die untere Abdeckplatte (22,23) identisch sind.

4. Konsole nach Anspruch 1, **dadurch gekennzeichnet, dass** die Moduln (9.1-9.8) baukastenartig in einem System mit verschiedener Höhe der Abschnitte (10,10.1) versehen sind.

5. Konsole nach Anspruch 1, **dadurch gekennzeichnet, dass** die Moduln (9.1-9.6) untereinander von jeweils einer Trennplatte (34) getrennt sind.

6. Konsole nach Anspruch 1, **dadurch gekennzeichnet, dass** die offenen Seiten (25) von einem Schottblech abgeschottet sind.

7. Konsole nach Anspruch 1, **dadurch gekennzeichnet, dass** die Konsole (1) zum Positionieren mit einem Stativ (35) verbunden ist.

## Claims

1. Console (1) comprising a vertically arranged support frame (2) and multiple connection sockets (3, 4) for medical-technical supply, **characterised in that**
(a) a first vertically arranged column (6) is arranged on a first side (5) of the support frame (2), and a second vertically arranged column (8) is arranged on a second opposite side (7), each respectively having modules (9.1-9.3; 9.4-9.6) positioned above one another;
(b) the modules (9.1-9.3; 9.4-9.6) are optionally provided with connection sockets (3, 4, 29);
(c) the modules (9.1-9.3; 9.4-9.6) consist of sections (10) of an extrusion profile (11, 11.1);
(d) the extrusion profile (11, 11.1) comprises a first and a second side wall (12, 13) of equal width at a right angle, wherein
(e) a first channel (16) is arranged in a first end region (15) of the first side wall (12), a second channel (18) is arranged in a second end region (17) of the second side wall (13), and a third channel (21) is arranged in an edge region (19) of an angle edge (20), each having a circular cross-section;
(f) all modules (9.1-9.3; 9.4-9.6) of the first and the second column (6, 8) are securely connected with an upper and a lower cover plate (22, 23) by means of a respective threaded rod (24) through all the channels (16, 18, 21);
(g) at an open side (25) of the modules (9.1-9.3; 9.4-9.6) the upper and lower cover plates (22, 23) each have an extension (26), on each of which a pivot bearing (27) is arranged and hingedly connected to the support frame (2) via a respective joint (28) for pivoting the first and the second column (6, 8) away from the support frame (2); and
(h) wherein the open sides (25) of the modules (9.1-9.3; 9.4-9.6) lie against the first and/or the second side (5, 7) of the support frame (2) in a pivoted closed position (A).

2. Console according to claim 1, **characterised in that**, in addition to the connection sockets (3, 4) for medical-technical supply, optional third connection sockets (29) are provided for electronic communication.

3. Console according to claim 1, **characterised in that** the upper and the lower cover plate (22, 23) are identical.

4. Console according to claim 1, **characterised in that** the modules (9.1-9.6) are provided as a modular system with different height of the sections (10, 10.1).

5. Console according to claim 1, **characterised in that** the modules (9.1-9.6) are separated from one another by a respective separating plate.

6. Console according to claim 1, **characterised in that** the open sides (25) are sealed off by a partition plate.

7. Console according to claim 1, **characterised in that** the console is connected to a support (35) for positioning.

## Revendications

1. Console (1), avec un châssis de support (2) disposé verticalement et avec plusieurs prises de raccordement (3, 4) pour l'alimentation de la technique médicale, **caractérisée**
(a) **en ce que** sur un premier côté (5) du châssis de support (2) est agencée une première colonne (6) disposée verticalement et sur un deuxième côté (7) opposé est agencée une deuxième colonne (8) disposée verticalement, comportant chacune des modules (9.1-9.3 ; 9.4-9.6) disposés les uns au-dessus des autres,
(b) **en ce que** les modules (9.1-9.3 ; 9.4-9.6) sont munis de prises de raccordement (3, 4, 29) optionnelles,
(c) **en ce que** les modules (9.1-9.3 ; 9.4-9.6) sont formés par des tronçons (10) d'un profilé extrudé (11, 11.1),
(d) **en ce que** le profilé extrudé (11) comporte une première et une deuxième paroi latérale (12, 13) de même largeur (14) disposées à angle droit, sachant que
(e) dans une première zone d'extrémité (15) de la première paroi latérale (12) est agencé un premier conduit (16), et dans une deuxième zone d'extrémité (17) de la deuxième paroi latérale (13) est agencé un deuxième conduit (18), et dans une zone d'angle (19) d'une arête angulaire (20) est agencé un troisième conduit (21), chacun ayant une section circulaire,
(f) **en ce que** tous les modules (9.1-9.3 ; 9.4-9.6) de la première et de la deuxième colonne (6, 8) sont reliés de manière fixe à une plaque de recouvrement supérieure (22) et à une plaque de recouvrement inférieure (23), dans chaque cas au moyen d'une tige filetée (24) par l'intermédiaire de tous les conduits (16, 18, 21),
(g) **en ce que** les plaques de recouvrement (22, 23) supérieure et inférieure, du côté d'une face (25) ouverte des modules (9.1-9.3 ; 9.4-9.6), comportent chacune un prolongement (26), dont chacun porte un palier rotatif (27) et est relié de manière articulée au châssis de support (2) par l'intermédiaire d'une articulation (28) respective pour faire pivoter la première et la deuxième colonne (6, 8) en s'écartant du châssis de support (2), et
(h) les faces (25) ouvertes des modules (9.1-9.3 ; 9.4-9.6), dans une position (A) pivotée fermée, étant en appui contre le premier et le deuxième côté (5, 7) du châssis de support (2).

2. Console selon la revendication 1, **caractérisée en ce que**, en plus des prises de raccordement (3, 4) pour l'alimentation de la technique médicale, il est prévu au choix des troisièmes prises de raccordement (29) pour la communication électronique.

3. Console selon la revendication 1, **caractérisée en ce que** les plaques de recouvrement (22, 23) supérieure et inférieure sont identiques.

4. Console selon la revendication 1, **caractérisée en ce que** les modules (9.1-9.6) sont prévus de manière modulaire dans un système avec différentes hauteurs des tronçons (10, 10. 1).

5. Console selon la revendication 1, **caractérisée en ce que** les modules (9.1-9.6) sont séparés les uns des autres respectivement par une plaque de séparation (34).

6. Console selon la revendication 1, **caractérisée en ce que** les faces (25) ouvertes sont cloisonnées par une tôle formant cloison.

7. Console selon la revendication 1, **caractérisée en ce que** ladite console (1) est reliée à un support (35) pour son positionnement.
